# EUROPEAN PATENT APPLICATION

(11) **EP 1 791 321 A1**
(43) Date of publication of application: **30.05.2007**
(21) Application number: 06301182.9
(22) Date of filing: 27.11.2006
(51) Int. Cl.: H04L 29/06

(54) **Method and system for unauthorized content detection for information transfer**

(30) Priority: 29.11.2005 US 288227
(71) Applicant: Alcatel Lucent, 75008 Paris (FR)
(72) Inventor: Abigail, Shawn Gregory, Kanata Ontario K2M 2E1 (CA)
(74) Representative: Hervouet, Sylvie

(57) **Abstract**

A method is provided for detecting offending or illegal download activity. An agency, such as a law enforcement agency, generates a list of checksums over a designated area of each of a set of computer files. The agency provides the list of checksums and an identification of the designated area to an administrator of a packet switch. The checksum of the designated area of packets passing through the switch are calculated. If a calculated checksum is found in the list of offending checksums, then the packet is flagged. In order to keep processing overhead manageable, a checksum for only some packets may be calculated. Although only known offending computer files can be detected in this manner, the use of known checksums of known offending computer files greatly reduces the likelihood of false positive detection of packets.

## Description

### Field of the invention

The invention relates to identification of specific files during transfer, and more particularly to detection of unauthorized images during transfer.

### Background of the invention

Internet Service Providers (ISPs) and enterprises are increasingly feeling the need to ensure that unauthorized content, such as pornographic images or copyrighted materials, are not transferred to end users using the network resources under the control of the ISP or the enterprise. For example, a law enforcement agency may ask an ISP to monitor for downloading of pornographic images showing illegal content. As another example, an enterprise may wish to monitor for downloading of pornographic images onto the enterprise network by employees. Blocking such downloads may be desirable, but detecting such downloads may also be useful, or even preferable in the case of surveillance of an individual's illegal download activities. In order to detect such download activity, detection of offending computer files as they through a switch is desirable.

One method of identifying offending computer files being transferred through a switch is to use a heuristic approach to detect files sharing certain types of features. Fuzzy logic may be used on measures of an image to evaluate the likelihood of an image being of an offending nature. One example of such a feature is a black rectangle overlaying a portion of the image, used to protect identities. However, while such heuristic techniques may detect a large number of offending images, they may also generate many false positives.

### Summary of the invention

In accordance with one aspect of the invention, a method is provided for detecting offending computer file segments. A designated area is defined. For each of a number of computer files, an offending checksum of bytes of the designated area of the computer file is calculated. A calculated checksum of bytes in the designated area of a computer file segment is calculated. If the calculated checksum matches at least one of the offending checksums, the computer file segment is determined to be an offending computer file segment.

The computer file segments may be computer files stored on a network. Alternatively, the computer file segments may be packets. In the latter embodiment, the invention can be applied to packets received at a packet switch. For each packet, it is determined whether the packet is to be checked. A calculated checksum is only calculated for packets to be checked. Determining whether a packet is to be checked may be based on any of checking a percentage of packets, checking packets whose source address matches a stored source address, checking packets whose destination address matches a destination address, checking the first packet of particular file types, or checking packets that exceed a size limit.

Apparatus are provided for carrying out the methods of the invention. The methods of the invention may be stored as processing instructions on computer-readable media.

The methods and apparatus of the present invention allow monitoring of packets being downloaded by end users for illegal or offending content, without interrupting traffic flow. Offending checksums are stored at the administrator site and not offending computer files themselves. Although checking for specific checksums within packets or computer files will only detect known offending material, the number of false positives that may result from more heuristic approaches is greatly reduced. Any false positives which do occur will have no impact on download activity, as the invention detects activity but does not block activity. Monitoring for known offending files, as defined by and provided by law enforcement agencies or other agencies, may be sufficient to demonstrate that an Internet service provider or an enterprise is exercising due diligence in monitoring and detecting illegal download activity.

### Brief description of the drawings

The features and advantages of the invention will become more apparent from the following detailed description of the preferred embodiment(s) with reference to the attached figures, wherein:
FIG. 1 is a diagram of a packet switch and other components according to one embodiment of the invention;
FIG. 2 is a flowchart of a method carried out by the switch of FIG. 1 according to one embodiment of the invention; and
FIG. 3 is a flowchart of a method carried out by the offending packet detector of FIG. 1 according to one embodiment of the invention.

It will be noted that in the attached figures, like features bear similar labels.

### Detailed description of the embodiments

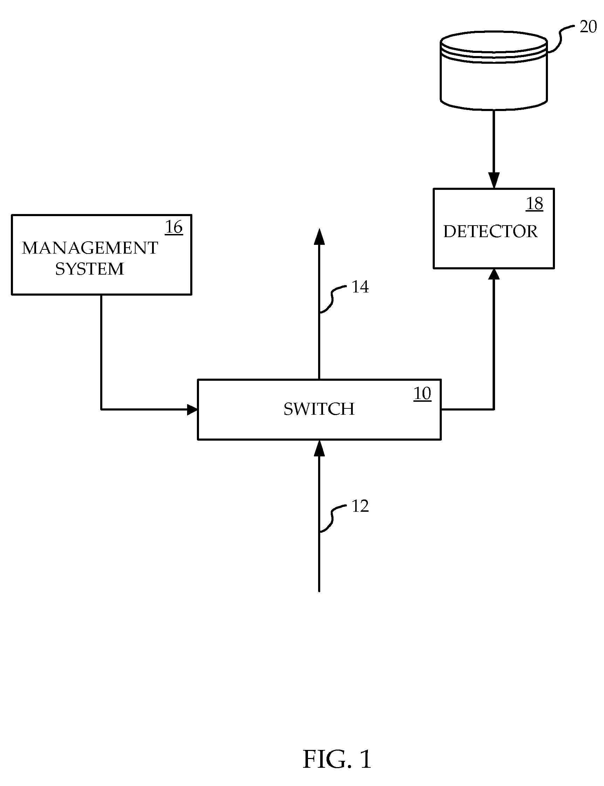

Referring to FIG. 1, a diagram of a packet switch and other components according to one embodiment of the invention is shown. A packet switch 10 receives incoming packets 12 and forwards them to a destination of an end user as outgoing packets 14. The packet switch 10 is not under the administrative control of the end user, but there is preferably some relationship between the administrative control of the packet switch 10 and the end user. For example, the packet switch 10 may be an ingress switch of an enterprise network, and the end user may be an employee of the enterprise. As another example, the packet switch 10 may be an access switch of an ISP, and the end user may be a customer of the ISP. In any event, the end user is a person downloading computer files, such as image files or music files stored as computer files, through the packet switch 10.

A management system 16 provides a management interface to the packet switch 10. An offending packet detector 18 receives copies of certain packets (as described below) from the packet switch 10. The offending packet detector 18 is preferably in the form of software on a processor separate from the packet switch 10, such as software on a personal computer in communication with the packet switch 18. The offending packet detector 18 may be located on the same platform as the management system 16. More generally, the offending packet detector 18 contains logical instructions in the form of any combination of software or hardware. Logical instructions in the form of software may be stored on a computer-readable medium.

The offending packet detector 18 is in communication with a database 20. The database 20 stores at least one table of offending checksums. Each table of offending checksums includes a definition of a designated area, at least one offending checksum, and an agency identification. For the remainder of this description each table will be assumed to store a plurality of offending checksums, for simplicity of description. Each designated region is a set of bytes, within a computer file, for which a checksum will be calculated. The designated region may be represented in any form that unambiguously defines a set of bytes by position within a computer file. For example, an offset of a first byte and a total number of bytes could be used to define the designated region.

The offending checksums and the definition of the associated designated region are provided by an agency, such as a law enforcement agency. Each offending checksum is generated from a specific computer file by calculating a checksum of the designated area of the computer file. For example, bytes 24 to 28 of the computer file could be used as the designated region, and the checksum calculated using the values of these bytes. The choice of which designated area of the computer file to use in calculating the checksum is left to the agency, but is preferably near the start of the computer file to ensure that the offset of the designated area is the same as the offset within the first packet if portions of the computer file are downloaded as the payload of several packets. The computer files used to generate the checksums may be any type of computer file for which an agency wishes to detect downloading. Examples of such computer files are pornographic image files and copyrighted music files.

In practice, the agency selects the designated region, and calculates a checksum for each computer file of a collection of offending computer files based on the designated region. The agency provides the definition of the designated region and the offending checksums, but not the actual offending computer files, to the administrator of the packet switch 10. The administrator of the packet switch 10 stores the definition of the designated region, the offending checksums, and an identification of the agency in the database 20. An agency may provide more than one definition of a designated region and associated offending checksums, generated for example from two different sets of offending computer files. More than one agency may each provide one or more tables of offending checksums to the administrator, and the database 20 may therefore store more than one table of offending checksums, some or all of the tables having different identifications of an agency.

The administrator of the packet switch 10 uses the management system to set a flag in the packet switch 10 enabling offending packet detection. The administrator also uses the management system to set parameters within the switch defining which packets are to be copied to the offending packet detector 18. The simplest parameter to set is a percentage of packets to be copied, such as 5% of all incoming packets 12 are to be copied to the offending packet detector. Such a percentage can be applied randomly or deterministically, in other words for a percentage of 5% every twentieth packet can be copied or there is a 5% chance of copying any particular packet. Other examples of parameters are packets over a certain size limit, packets which can be identified as being the first packet of a particular file type (such as image, music, or movie files), the source address of packet matching a stored source address, the destination address of packet matching a stored destination address, or any combination of these parameters.

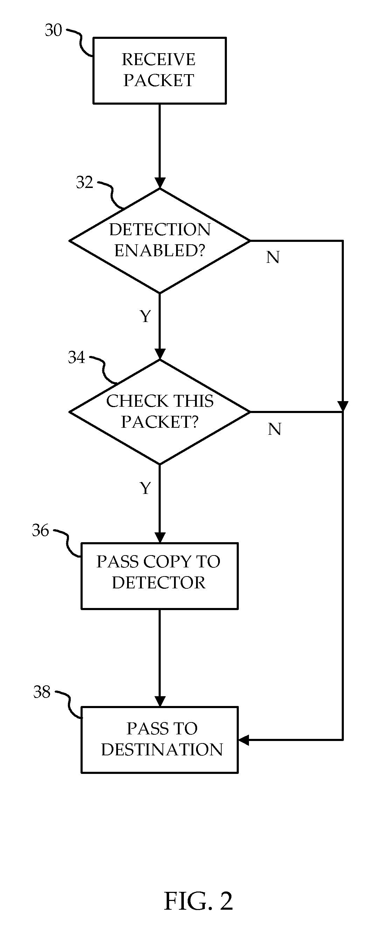

Referring to FIG. 2, a flowchart of a method carried out by the packet switch 10 according to one embodiment of the invention is shown. At step 30 the packet switch 10 receives an incoming packet. The packet switch determines at step 32 whether offending packet detection has been enabled. If offending packet detection has been enabled, at step 34 the packet switch considers the parameters to determine whether the incoming packet is to be copied to the offending packet detector. If the packet switch determines that the incoming packet is to be copied, then at step 36 the packet switch copies the packet to the offending packet detector 18. The packet switch then passes the incoming packet to the destination indicated in the packet, namely the end user who requested the download, at step 38. If offending packet detection has not been enabled, or if the packet switch determines that the incoming packet is not to be copies, then the packet switch simply passes the incoming packet to the destination indicated in the packet.

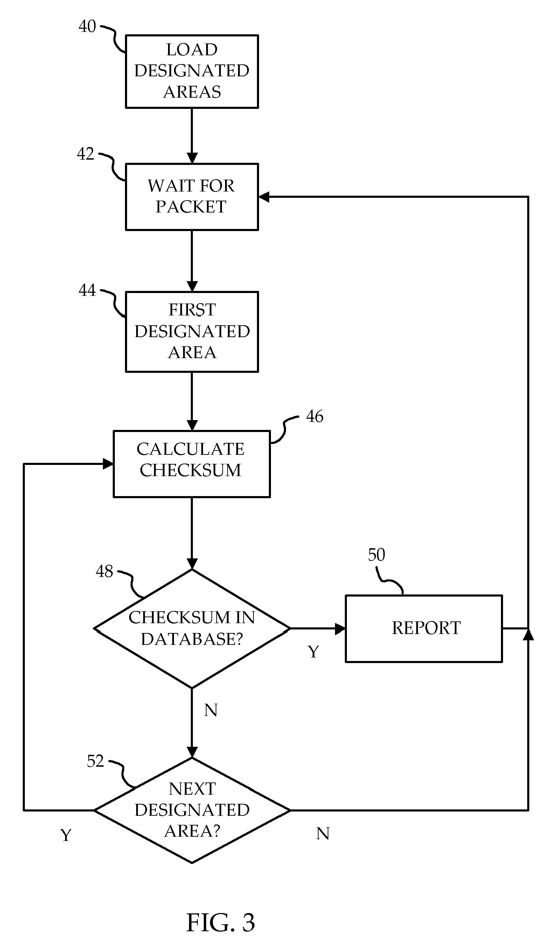

Referring to FIG. 3, a flowchart of a method carried out by the offending packet detector 18 according to one embodiment of the invention is shown. When the offending packet detector 18 is started, the offending packet detector 18 reads the database 20, and for each table in the database 20 the offending packet detector loads the definition of the designated area. The offending packet detector 18 stores a record in memory, each record being associated with one table in the database 20. Each record includes the definition of a designated area read from the corresponding table, a link to the set of at least one offending checksum in the table, and a link to the identification of the agency in the table. At step 42 the offending packet detector 18 waits for a packet to arrive from the packet switch 10. Such a packet will arrive when the packet switch copies a packet, as described above with reference to step 36 of FIG. 2.

When a packet arrives at the offending packet detector 18, the offending packet detector considers the definition of the first designated area at step 44, being the designated area included in one of the records. At step 46 the offending packet detector calculates the checksum of bytes within the packet, the bytes being selected from the definition of the designated area. At step 48 the offending packet detector determines whether the calculated checksum determined at step 46 is within the set of at least one offending checksums in the corresponding table, using the link within the record of the designated area to access the set of at least one offending checksums.

If the offending packet detector determines at step 48 that the calculated checksum is within the set of at least one offending checksums, then at step 50 the offending packet detector generates a report. The report identifies the packet, including the destination address, source address, computer file to which the packet belongs, the offending checksum, and the identification of the agency associated with the table containing the offending checksum. This report may be used by the administrator in any way, such as for internal monitoring, for passing to the agency, or merely for record keeping. After generating the report, the offending packet detector awaits another packet from the packet switch at step 42.

It should be noted that even if a packet is detected for which the checksum of the designated area is an offending checksum, the packet has still been forwarded to the appropriate destination by the packet switch 10 at step 38 of FIG. 2. This allows processing of incoming packets by the packet switch 18 to be carried out with very little processing overhead of calculating checksums and consulting databases. This also greatly reduces the impact of false positive identifications, as an end user who downloads a file which results in a false positive will not have any of his or her traffic affected. The invention is intended to monitor and record offending activity, not block traffic. If the agency determines from the report generated at step 50 that a false positive has occurred, then the end users traffic is left unaffected. Even if the report indicates a genuine offending packet, it is up to the administrator or the agency to determine what action to take next. The end user's traffic may be left unaffected, or the parameters used by packet switch at step 34 may be altered to copy all packets destined for the end user to the offending packet detector, allowing surreptitious monitoring of the end user's subsequent download activity.

If the offending packet detector determines at step 48 that the calculated checksum is not in the database and is therefore not an offending checksum, the offending packet detector determines at step 52 whether there is another definition of a designated area to be considered. Such would be the case if the database 20 included more than one table of offending checksums, for example if more than one agency was interested in monitoring download activity through the packet switch 20, or if a single agency had provided more than one set of offending checksums. If there is a next definition of a designated area, the offending packet descriptor calculates a checksum for the designated at step 46 and determines whether the calculated checksum matches an offending checksum within the table corresponding to the designated area. The offending packet detector continues to calculate and check checksums for each designated area loaded at step 40, until all designated areas have been checked. The offending packet detector then awaits arrival of another packet from the packet switch at step 42.

If a new set of offending checksums is provided by an agency, then the database 20 is updated to include a new table and the offending packet detector is restarted so that the table, including the definition of the new designated area and a link to the new checksums, is loaded into memory of the offending packet descriptor at step 40 of FIG. 3.

In one embodiment of the invention, the offending packet detector 18 provides communications to the packet switch 10 in the same way as the management system 16. If the offending packet detector 18 determines that the calculated checksum of a packet is an offending checksum at step 48, then in addition to generating a report the offending packet detector 18 modifies the behaviour of the packet switch 10. The offending packet detector 18 adjusts the parameters used by the packet switch 10 at step 34 to determine whether a packet is to copied to the offending packet detector. The parameters may be changed to screen more packets destined for the end user or originating from the source of the offending packets. For example, if an offending packet is found, then the parameters can be adjusted such that the packet switch copies to the offending packet detector a higher percentage of, or even all, packets downloaded by the end user.

The invention has been described as using an offending packet detector separate from the packet switch 10. The packet switch 10 carries out an initial screening function on packets independent of the packet payload contents. The payload of the packet is considered and the database consulted by the separate offending packet detector. This minimizes processing overhead on the packet switch 10, and allows much of the method to be implemented in software. The logic to determines if a packet has an offending checksum, as described above with reference to FIG. 3, may alternatively be implemented on the packet switch itself. However, in order to keep processing times to a minimum this may require significant hardware changes to the packet switch 10. As yet another alternative, the packet switch 10 could copy all traffic to a separate hardware device containing logic circuits for carrying out the methods described above with reference to FIG. 2 and FIG. 3.

The invention has been described as monitoring packets passing through a packet switch. The offending packet detector may also be applied to monitor computer files stored on a network, although the detector should more properly be termed an offending file detector. This allows the administrator of a network to scan computer files stored by users of the network for offending computer files. For example, the administrator of an enterprise network can use the invention to scan files of employees. Instead of receiving packets at step 42, the offending file detector receives a location of a stored computer file. The logic described above with reference to FIG. 3 is otherwise unchanged, the offending file detector calculating checksums over designated areas of each computer file and comparing the calculated checksum with offending checksums stored in a database. The invention is more generally then directed to detection of offending computer file segments, where a computer file segment for which a checksum is calculated and compared with stored offending checksums may be either a packet carrying a portion of a computer file as a payload or may be an entire computer file stored on a network. The offending packet detector may more generally be referred to as an offending computer file segment detector so as to include the embodiment in which computer files stored on a network are monitored.

The embodiments presented are exemplary only and persons skilled in the art would appreciate that variations to the embodiments described above may be made without departing from the spirit of the invention. The scope of the invention is solely defined by the appended claims.

## Claims

1. A method of detecting offending computer file segments, comprising:
defining a designated area;
for each of at least one computer file, calculating an offending checksum of bytes of the designated area of the computer file;
calculating a calculated checksum of bytes in the designated area of a computer file segment;
determining whether the calculated checksum matches any of the at least one offending checksum; and
if the calculated checksum matches at least one offending checksum, determining that the computer file segment is an offending computer file segment.

2. The method of claim 1 wherein at least one computer file is an image file.

3. The method of claim 1 wherein at least one computer file is a music file.

4. The method of claim 1 wherein at least one computer file is a movie file.

5. The method of claim 1 wherein each computer file segment is a packet, the method further comprising:
receiving a plurality of packets; and
for each packet, determining whether the packet is to checked,
and wherein calculating a calculated checksum, determining whether the calculated checksum matches any offending checksum, and determining that the packet is an offending packet are only carried out with respect to packets that are to be checked.

6. The method of claim 5 wherein at least one computer file is an image file.

7. The method of claim 5 wherein at least one computer file is a music file.

8. The method of claim 5 wherein determining whether the packet is to be checked comprises determining a percentage of packets are to be checked.

9. The method of claim 5 wherein determining whether the packet is to be checked comprises determining that a packet is to be checked if a source address of the packet matches a stored source address.

10. The method of claim 5 wherein determining whether the packet is to be checked comprises determining that a packet is to be checked if a destination address of the packet matches a stored destination address.

11. The method of claim 5 wherein determining whether the packet is to be checked comprises determining that a packet is to be checked if the packet is a first packet of a particular file type.

12. The method of claim 5 wherein determining whether the packet is to be checked comprises determining that a packet is to be checked if the packet exceeds a size limit.

13. The method of claim 5 further comprising modifying parameters by which it is determined whether a packet is to be checked, in the event that a packet is determined to be an offending packet.

14. The metho d of claim 13 wherein the parameters are mo dified so that all packets having a source address matching the source address of the offending packet are determined to be checked.

15. The metho d of claim 13 wherein the parameters are modified so that all packets having a destination address matching the destination address of the offending packet are determined to be checked.

16. The method of claim 5 wherein receiving a plurality of packets and determining whether each packet is to checked are carried out by a packet switch, and wherein calculating a calculated checksum, determining whether the calculated checksum matches any of the at least one offending checksum, and determining that the packet is an offending packet are carried out by a separately from the packet switch.

17. The method of claim 1 wherein each computer file segment is a computer file stored on a network.

18. A system for detecting offending packets, comprising:
a database for storing a definition of a designated area and at least one offending checksum;
a packet switch for receiving a plurality of packets and for determining whether each packet is to be checked; and
an offending packet detector for calculating a calculated checksum of bytes in the designated area of each packet to be checked, for determining whether any calculated checksum matches any of the at least one offending checksum, and for determining that a packet is an offending packet if the calculated checksum of the packet matches at least one offending checksum.

19. A computer-readable medium storing instructions which can be processed by a processor, the instructions comprising:
instructions for retrieving a definition of a designated area from a database;
instructions for receiving a packet;
instructions for calculating a calculated checksum of bytes in the designated area of the packet to be checked;
instructions for determining whether the calculated checksum matches any of at least one offending checksum stored in the database; and
instructions for determining that the packet is an offending packet if the calculated checksum matches at least one offending checksum.
